# EUROPEAN PATENT APPLICATION

(11) **EP 3 854 651 A1**
(43) Date of publication of application: **28.07.2021**
(21) Application number: 19875065.5
(22) Date of filing: 21.10.2019
(51) Int. Cl.: B60W 50/035, B60R 16/023, H04L 12/28, H04L 12/46, G08G 1/16

(54) **ELECTRONIC CONTROL DEVICE, ELECTRONIC CONTROL METHOD, AND PROGRAM**

(30) Priority: 25.10.2018 JP 2018200503
(71) Applicant: Panasonic Intellectual Property Management Co., Ltd., Osaka-shi, Osaka 540-6207 (JP)
(72) Inventor: WADA, Hiroyuki, Chuo-ku, Osaka-shi Osaka 540-6207 (JP); NAKANO, Toshihisa, Chuo-ku, Osaka-shi Osaka 540-6207 (JP); YOKOTA, Kaoru, Chuo-ku, Osaka-shi Osaka 540-6207 (JP); FUJII, Takayuki, Chuo-ku, Osaka-shi Osaka 540-6207 (JP)
(74) Representative: Eisenführ Speiser
(86) International application number: PCT/JP2019/041382
(87) International publication number: WO 2020/085330

(57) **Abstract**

An electronic control device (1) is connected to at least one bus (110) of a mobile object, and includes: a controller (60) that controls behavior of the mobile object; an anomaly detector (10) that performs detection to detect an anomaly in communication data which flows through the at least one bus (110) and which includes identification information for identifying control details related to the behavior of the mobile object; and an obtainer (40) that obtains at least one piece of identification information corresponding to a result of the detection.

## Description

### [Technical Field]

The present disclosure relates to an electronic control device, an electronic control method, and a program that are used for control in the event of an anomaly occurring to a mobile object, such as a vehicle.

### [Background Art]

An in-vehicle network system includes a plurality of electronic control units (ECUs) that transmit and receive controller area network (CAN) frames via an in-vehicle bus according to a CAN protocol. A mobile object like a vehicle including such an in-vehicle network system may be taken over by an attacker executing a remote cyberattack, for example. In this case, the mobile object may become uncontrollable by an occupant of the mobile object or a control center. To address this, a technology has been disclosed for example, which detects an anomaly occurring to the in-vehicle network system and discards a CAN frame including a CAN ID related to the detected anomaly (see Patent Literature [PTL] 1, for example). This technology discards an anomalous CAN frame received from an attacker and thereby prevents the mobile object from being taken over by the attacker.

### [Citation List]

### [Patent Literature]

[PTL 1] WO 2018/070155

### [Summary of Invention]

### [Technical Problem]

In the event of an anomaly occurring to a mobile object, such as a vehicle, the mobile object is to be stopped safely. The aforementioned technology disclosed in PTL 1 discards all CAN frames including the CAN ID related to the detected anomaly. Thus, a CAN frame used for controlling the mobile object having an advanced drive assistance system (ADAS) may also be discarded, for example. In this case, ADAS control or automated emergency stop cannot be performed. As a result, the mobile object may not be stopped safely.

In view of this, the present disclosure provides an electronic control device and so forth that are capable of safely stopping a mobile object in the event of an anomaly occurring to the mobile object.

### [Solution to Problem]

In order to achieve the above object, an electronic control device in accordance with an aspect of the present invention is connected to at least one bus of a mobile object, and includes: a controller that controls behavior of the mobile object; an anomaly detector that performs detection to detect an anomaly in communication data which flows through the at least one bus and which includes identification information for identifying control details related to the behavior of the mobile object; and an obtainer that obtains at least one piece of identification information corresponding to a result of the detection.

In order to achieve the above object, an electronic control method in accordance with another aspect of the present invention is used by an electronic control device that is connected to at least one bus of a mobile object, and includes: controlling behavior of the mobile object; performing detection to detect an anomaly in communication data which flows through the at least one bus and which includes identification information for identifying control details related to the behavior of the mobile object; and obtaining at least one piece of identification information corresponding to a result of the detection.

In order to achieve the above object, a program in accordance with still another aspect of the present invention causes a computer to execute the above-described electronic control method.

### [Advantageous Effects of Invention]

According to the present disclosure, a mobile object can be stopped safely in the event of an anomaly occurring to the mobile object.

### [Brief Description of Drawings]

[FIG. 1]

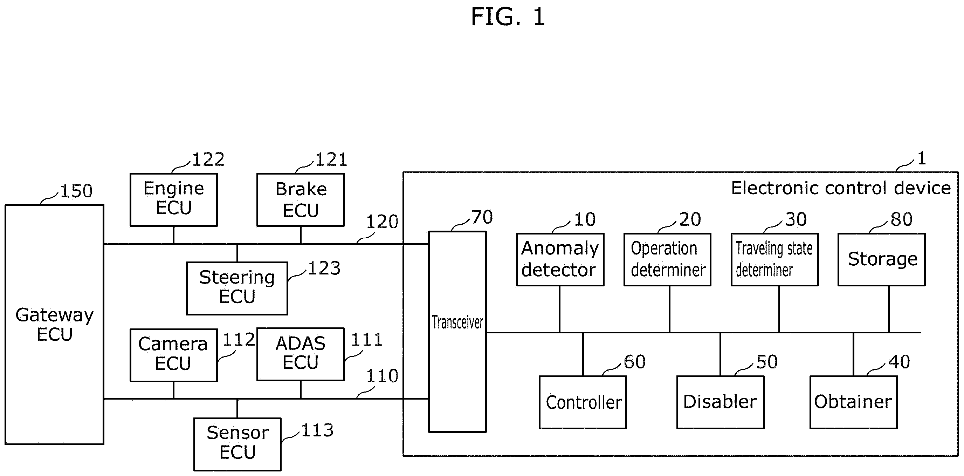

   FIG. 1 is a configuration diagram illustrating an example of an electronic control device according to Embodiment.
[FIG. 2]

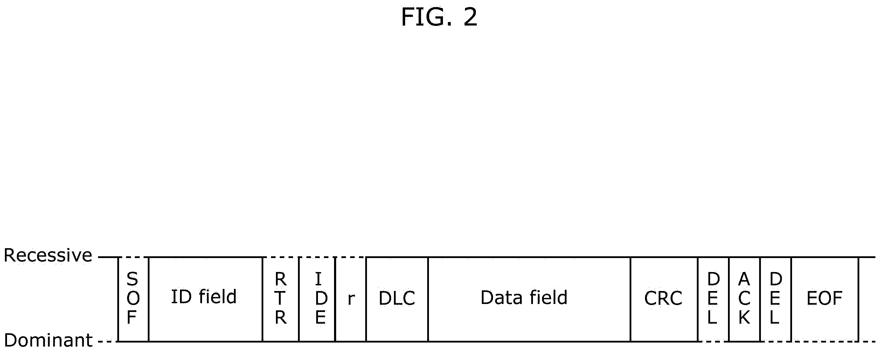

   FIG. 2 illustrates a data format defined by the CAN protocol.
[FIG. 3]

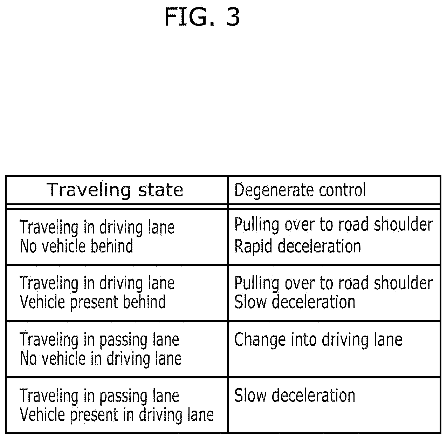

   FIG. 3 is a table illustrating an example of a correspondence relationship between a vehicle state and vehicle control details.
[FIG. 4]

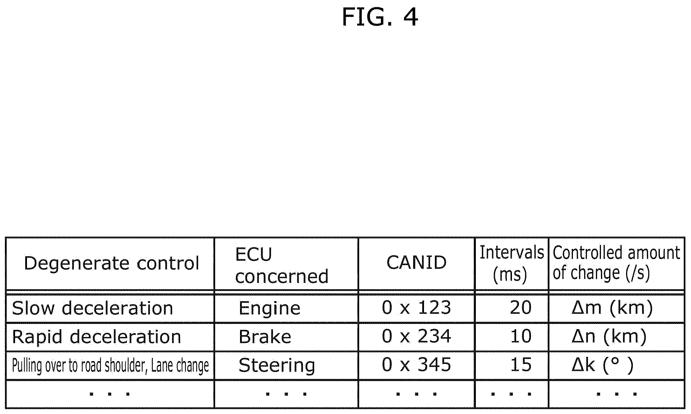

   FIG. 4 is a table illustrating an example of a correspondence relationship between vehicle control details and identification information.
[FIG. 5]

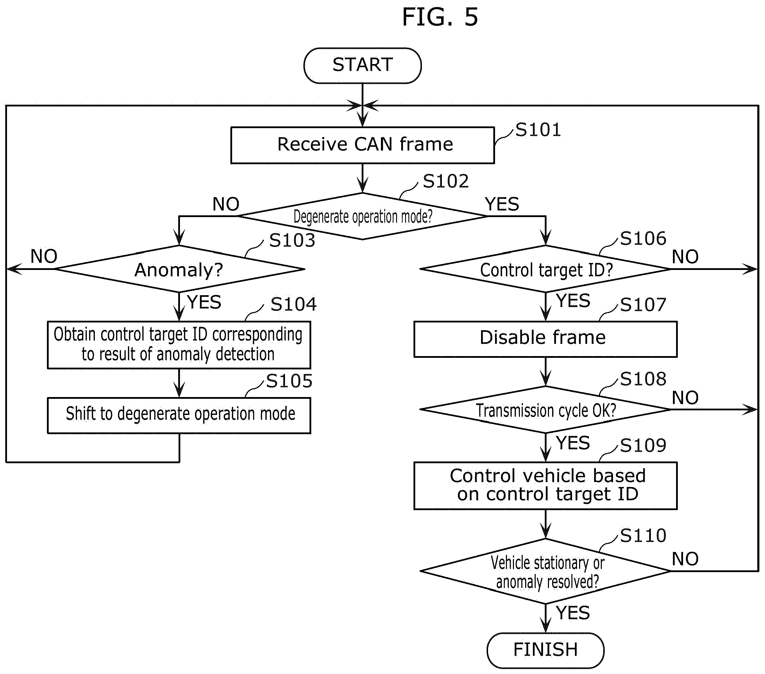

   FIG. 5 is flowchart illustrating an example of an operation performed by the electronic control device according to Embodiment.
[FIG. 6]

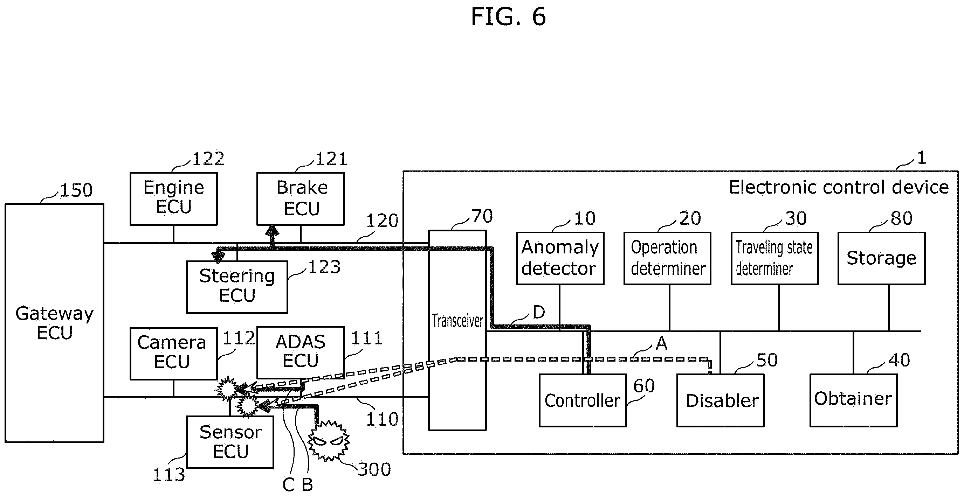

   FIG. 6 illustrates an operation of the electronic control device according to Embodiment.
[FIG. 7]

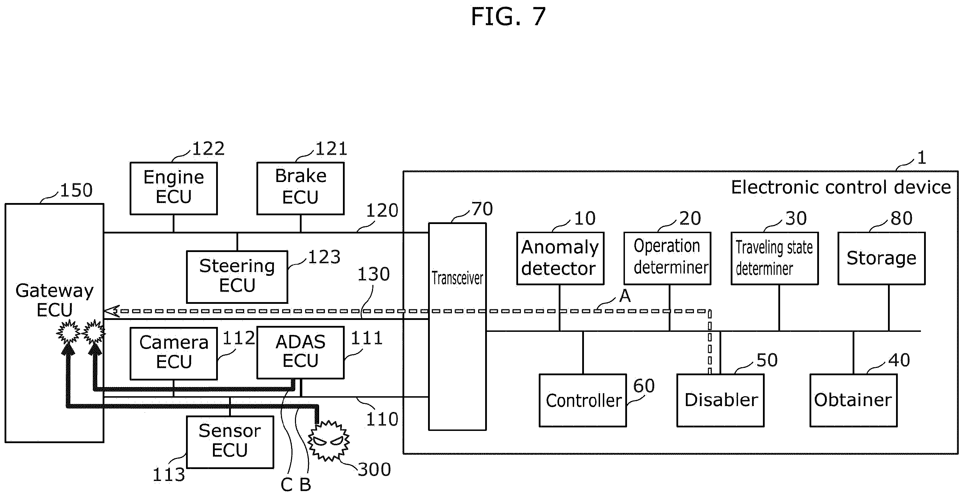

   FIG. 7 is a configuration diagram illustrating an example of an electronic control device according to Variation 1 of Embodiment.
[FIG. 8]

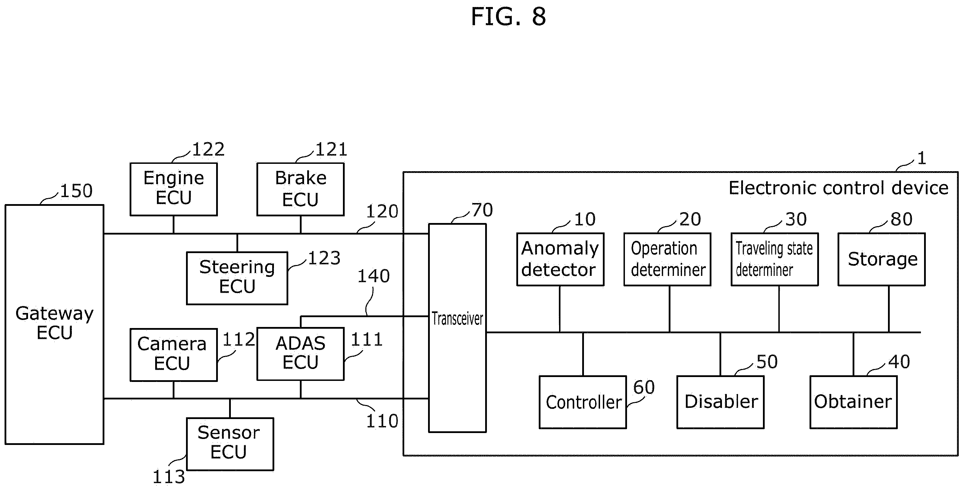

   FIG. 8 is a configuration diagram illustrating an example of an electronic control device according to Variation 2 of Embodiment.
[FIG. 9]

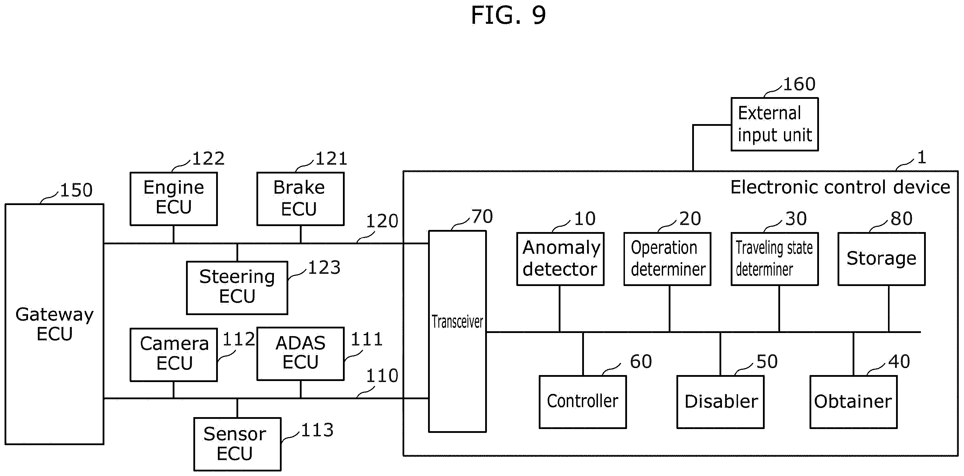

   FIG. 9 is a configuration diagram illustrating an example of an electronic control device according to Variation 3 of Embodiment.
[FIG. 10]

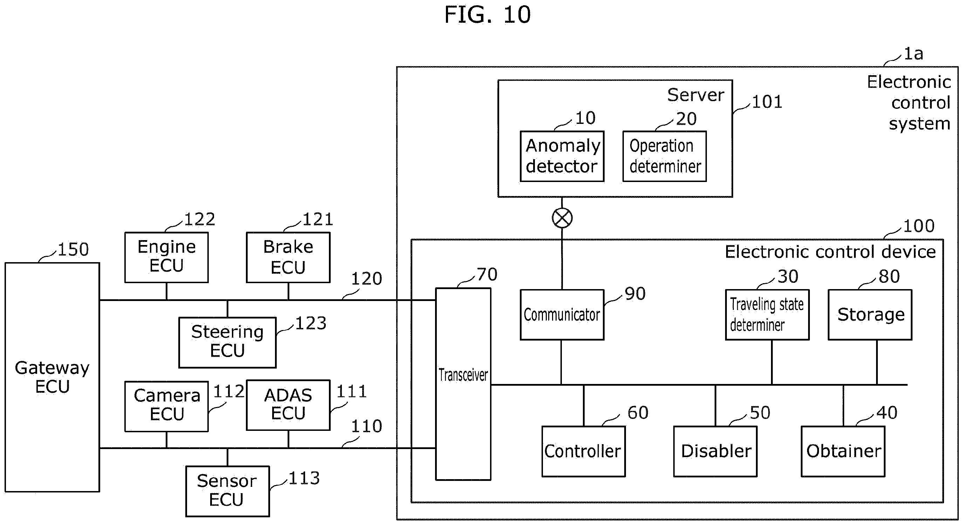

   FIG. 10 illustrates an example of an electronic control system according to another embodiment.
[FIG. 11]

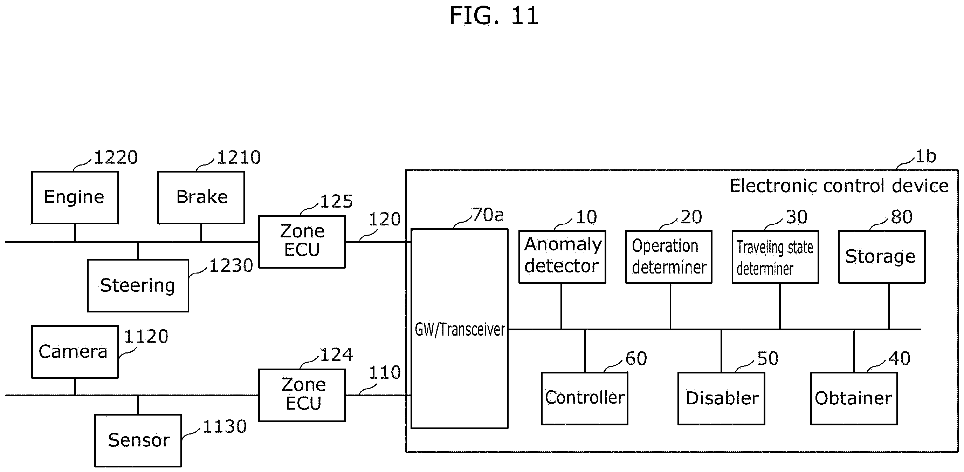

   FIG. 11 is a configuration diagram illustrating an example of an electronic control device according to another embodiment.

### [Description of Embodiment]

### [Embodiment]

The following describes an electronic control device according to Embodiment, with reference to the drawings.

### [1 Configuration of Electronic Control Device]

FIG. 1 is a configuration diagram illustrating an example of electronic control device 1 according to Embodiment. Note that FIG. 1 also illustrates components connected to electronic control device 1.

Electronic control device 1 is installed in a mobile object, for example. In the following, the mobile object is described as a vehicle, such as an automobile. However, the mobile object is not limited to an automobile, and may be construction equipment, farm equipment, a ship, a train, a robot, or an airplane, for example.

Electronic control device 1 is an example of an ECU that is connected to an in-vehicle network and performs communication according to the CAN protocol. The in-vehicle network is installed in a vehicle equipped with various devices, such as a control device, a sensor, an actuator, and a user interface device. Electronic control device 1 is connected to at least one bus included in the vehicle. Communication data, which includes identification information for identifying control details related to the vehicle, flows through the at least one bus. Electronic control device 1 according to the present embodiment is connected to at least two buses, as the at least one bus. To be more specific, electronic control device 1 is connected to two buses 110 and 120 as illustrated in FIG. 1. In the present embodiment, buses 110 and 120, the communication data, and the identification information refer to CAN buses, a CAN frame, and a CAN ID, respectively, based on the CAN protocol.

Each of the at least two buses (buses 110 and 120) is connected to a plurality of ECUs including electronic control device 1. FIG. 1 illustrates examples of the plurality of ECUs, such as electronic control device 1, ADAS ECU 111 (driver assistance device), camera ECU 112, sensor ECU 113, brake ECU 121, engine ECU 122, steering ECU 123, and gateway ECU 150 (gateway device). Although the buses of the vehicle may be connected to more ECUs in addition to these ECUs, only these ECUs are described as examples.

Each of the plurality of ECUs including electronic control device 1 is a device that includes a processor, a digital circuit like a memory, an analog circuit, and a communication circuit, for example. The memory includes a ROM and a RAM, and is capable of storing a program to be executed by the processor. For example, the processor operates according to the program, so that electronic control device 1 and the ECUs achieve various functions. Electronic control device 1 and the ECUs transmit and receive communication data via buses 110 and 120 of the vehicle, according to the CAN protocol.

Gateway ECU 150 is a gateway device that transfers communication data from one bus to the other bus. In the present example, gateway ECU 150 is connected to the at least two buses (buses 110 and 120). Thus, gateway ECU 150 transfers the communication data from bus 110 to bus 120, and from bus 120 to bus 110. Note that electronic control device 1 may have the function of gateway ECU 150.

ADAS ECU 111 obtains results of sensing performed around the vehicle, from camera ECU 112 and sensor ECU 113 via bus 110, for example. These results of sensing are sensor information on a surrounding environment of the vehicle received from, for example, a camera, light detection and ranging (LIDAR), radar, or sonar. ADAS ECU 111 uses this sensor information to generate communication data (CAN frame) including identification information (CAN ID) for ADAS control, such as parking assistance, cruise control, or collision damage mitigation braking. Then, ADAS ECU 111 transmits this communication data to, for example, brake ECU 121, engine ECU 122, and steering ECU 123 via bus 110, gateway ECU 150, and bus 120. As a result, ADAS control is performed to control brake ECU 121, engine ECU 122, and steering ECU 123, for example.

Electronic control device 1 includes anomaly detector 10, operation determiner 20, traveling state determiner 30, obtainer 40, disabler 50, controller 60, transceiver 70, and storage 80. Transceiver 70 is implemented by, for example, a communication circuit included in electronic control device 1. Transceiver 70 is connected to buses 110 and 120 to receive communication data from buses 110 and 120 and transmit communication data to buses 110 and 120. Storage 80 is a memory including a ROM and a RAM, and stores a program to be executed by a processor. Moreover, storage 80 stores: a table, described later, that indicates a correspondence relationship between a vehicle state and vehicle control details; and a table, described later, that indicates a correspondence relationship between vehicle control details and identification information. Note that electronic control device 1 may include a single memory or a plurality of memories. In the present embodiment, the single memory or the plurality of memories are described as storage 80. For example, the processor included in electronic control device 1 operates according to the program stored in storage 80, so that the functional structural components, such as anomaly detector 10, operation determiner 20, traveling state determiner 30, obtainer 40, disabler 50, and controller 60, are implemented.

Anomaly detector 10 detects an anomaly in the communication data that flows through the at least one bus (buses 110 and 120 in the present embodiment) and that includes the identification information for identifying the control details related to behavior of the vehicle. To be more specific, anomaly detector 10 detects an anomaly of a CAN frame including a CAN ID that flows through buses 110 and 120 and is received via transceiver 70. Anomaly detector 10 verifies, for example, the CAN ID included in the CAN frame, control parameters in a data length code (DLC) and a data field, and a reception cycle and a reception frequency of the CAN frame. Then, anomaly detector 10 determines whether this CAN frame is normal as in a normal operating condition. Here, the method of detecting an anomaly in communication data may be any method that is typically known, and description of this method is thus omitted. A log of the anomaly detected by anomaly detector 10 (referred to as the anomaly log) is stored into storage 80, for example.

Operation determiner 20 determines whether the vehicle has an anomaly, in accordance with the anomaly log. If the vehicle has an anomaly and thus safe driving is difficult, operation determiner 20 shifts electronic control device 1 into a degenerate operation mode. In the degenerate operation mode, degenerate control is performed on the vehicle. By the degenerate control, the vehicle is safely stopped. For example, the steering is controlled so that the vehicle moves to a side (shoulder) of a road, or the engine or brake is controlled so that the speed of the vehicle decreases. When the number of anomaly logs reaches a predetermined number, operation determiner 20 determines that the vehicle has an anomaly and thus that safe driving is difficult. This is because, based on only one anomaly log, it is hard to specifically determine an anomaly or to determine that an anomaly is actually occurring. Here, in the event of a fatal anomaly, operation determiner 20 may determine that the vehicle has an anomaly and thus that safe driving is difficult.

Traveling state determiner 30 determines a state (traveling state) of the vehicle. For example, traveling state determiner 30 determines the state of the vehicle using results of sensing received from, for example, camera ECU 112 and sensor ECU 113 via transceiver 70. More specifically, the state of the vehicle determined by traveling state determiner 30 indicates a speed of the vehicle, a lane in which the vehicle is traveling, or whether another vehicle is present ahead or behind or on the right or left, for example. Traveling state determiner 30 determines the state of the vehicle in accordance with the communication data detected as having no anomaly by anomaly detector 10, among the results of sensing received from camera ECU 112 and sensor ECU 113, for example. This is because the use of the communication data detected as having an anomaly may not allow the state of the vehicle to be determined correctly if unauthorized rewriting has been performed on this communication data.

Obtainer 40 obtains at least one piece of identification information corresponding to a result of anomaly detection performed by anomaly detector 10. As described above, the identification information is used for identifying the control details related to the vehicle, and is a CAN ID to be more specific. The at least one piece of identification information corresponding to the result of anomaly detection performed by anomaly detector 10 includes, for example: identification information included in communication data detected as having an anomaly (or more specifically, a CAN ID included in an anomalous frame injected in, for instance, bus 110 by an attacker, for example); identification information included in communication data transmitted and received by an ECU connected to the bus through which the communication data detected as having the anomaly flows (or more specifically, a CAN ID included in an ADAS frame transmitted and received by ADAS ECU 111 connected to bus 110 through which a CAN frame detected as having an anomaly flows, for example); or identification information included in communication data used to address the detected anomaly (communication data used for degenerate control) (or more specifically, a CAN ID included in a frame used to cause, for example, brake ECU 121, engine ECU 122, or steering ECU 123 to perform degenerate control, for example). Obtainer 40 may obtain a plurality of pieces of identification information as the at least one piece of identification information. For example, obtainer 40 obtains at least one piece of identification information determined in accordance with the result of anomaly detection performed by anomaly detector 10, the table indicating the correspondence relationship between the vehicle state and the vehicle control details, and the table indicating the correspondence relationship between the vehicle control details and the identification information. These tables are described later.

Disabler 50 disables communication data that includes at least one piece of identification information and that is detected as having an anomaly. To be more specific, disabler 50 disables this communication data flowing through the at least one bus (buses 110 and 120 in the present embodiment). Details are described with reference to FIG. 5 and FIG. 6 later. For example, disabler 50 disables the communication data including the at least one piece of identification information and flowing through the bus, by generating an error frame and transmitting, via transceiver 70, this error frame to the bus through which the communication data detected as having the anomaly flows.

Controller 60 controls behavior of the vehicle. For example, controller 60 controls the behavior of the vehicle in accordance with the control details identified by at least one piece of identification information obtained by obtainer 40. To be more specific, controller 60 controls the vehicle in accordance with the identification information included in the communication data used to address the anomaly detected by anomaly detector 10. An operation performed by controller 60 is described later with reference to FIG. 5 and FIG. 6.

### [2 Data Frame Format]

The following describes a data frame, which is a piece of communication data (a CAN frame) used in a network based on the CAN protocol.

FIG. 2 illustrates a data frame format defined by the CAN protocol. This diagram illustrates a data frame in a standard ID format defined by the CAN protocol. A data frame includes a plurality of fields. The plurality of fields include: Start of frame (SOF); ID field; Remote transmission request (RTR); Identifier extension (IDE); Reserved bit "r"; Data length code (DLC); Data field; Cyclic redundancy check (CRC) sequence; CRC delimiter "DEL"; Acknowledgement (ACK) slot; ACK delimiter "DEL"; and End of frame (EOF). In the present embodiment, descriptions on SOF, RTR, IDE, Reserved bit "r", DLC, CRC sequence, CRC delimiter "DEL", ACK slot, ACK delimiter "DEL", and EOF are omitted.

The ID field stores a CAN ID represented by an 11-bit value indicating the type of data. When two or more nodes simultaneously start transmission, communication arbitration is conducted based on this ID field. The CAN is designed to prioritize a frame having a smaller ID value.

The data field stores data, and a maximum length of the data field is 64 bits.

Each of the ECUs that transmits a CAN frame stores, into the data field, predetermined type of data according to specifications of the in-vehicle network. Then, the ECU stores a CAN ID predetermined corresponding to this type of data into the ID field, so that a data frame is created and transmitted. Vehicle manufacturers, for example, predetermine CAN IDs used for CAN frames in association with corresponding data structures as the specifications of the in-vehicle network.

### [3 Table Indicating Correspondence Relationship between Vehicle State and Vehicle Control Details]

The following describes a table indicating a correspondence relationship between a vehicle state and vehicle control details, with reference to FIG. 3. This table is used to determine at least one piece of identification information to be obtained by obtainer 40.

FIG. 3 is a table illustrating an example of the correspondence relationship between a vehicle state and vehicle control details. More specifically, FIG. 3 is a table illustrating a correspondence relationship between a traveling state of the vehicle and degenerate control details of the vehicle. For example, this table is previously stored in storage 80.

For example, if operation determiner 20 determines that an anomaly occurs to the vehicle, the degenerate control details are determined in accordance with the vehicle traveling state determined by traveling state determiner 30 and this table. The following describes degenerate control performed to pull over and stop the vehicle on a road shoulder.

For example, suppose that the vehicle traveling state at the time of anomaly occurrence is indicated as that: the vehicle is traveling in a driving lane; and no vehicle is present behind. In this case, the degenerate control details are determined so that the vehicle is pulled over to the road shoulder and the speed of the vehicle is rapidly decreased. Such determination is made because the vehicle is traveling in the driving lane and thus can be pulled over to the road shoulder of this driving lane. Moreover, such determination is made because no vehicle is present behind and thus the speed of the vehicle can be rapidly decreased.

For example, suppose that the vehicle traveling state at the time of anomaly occurrence is indicated as that: the vehicle is traveling in a driving lane; and another vehicle is present behind. In this case, the degenerate control details are determined so that the vehicle is pulled over to the road shoulder and the speed of the vehicle is slowly decreased. Such determination is made because the vehicle is traveling in the driving lane and thus the vehicle can be pulled over to the shoulder of this driving lane. Moreover, such determination is made because another vehicle is present behind and thus the vehicle is to slowly reduce the speed without rapid deceleration to avoid being rear-ended by this another vehicle.

For example, suppose that the vehicle traveling state at the time of anomaly occurrence is indicated as that: the vehicle is traveling in a passing lane; and no vehicle is present behind. In this case, the degenerate control details are determined so that the vehicle makes a lane change to a driving lane. Such determination is made because the vehicle is traveling in the passing lane at the time of anomaly occurrence and thus is to first make a lane change to the driving lane to be pulled over to the road shoulder. Moreover, such determination is made because no vehicle is present in the driving lane and thus the vehicle is allowed to make a lane change to the driving lane.

For example, suppose that the vehicle traveling state at the time of anomaly occurrence is indicated as that: the vehicle is traveling in a passing lane; and a vehicle is present in a driving lane. In this case, the degenerate control details are determined so that the vehicle is to slowly reduce the speed. Here, the vehicle is traveling in the passing lane at the time of anomaly occurrence and thus is to first make a lane change to the driving lane to be pulled over to the road shoulder. However, the vehicle is not allowed to make a lane change to the driving lane because another vehicle is present in the driving lane. For this reason, the above determination is made because the vehicle is to wait, while slowly reducing the speed, until being allowed to make a lance change to the driving lane.

To inform externally that degenerate control is currently being performed or to be performed, hazard lights or brake lights may be turned on in accordance with this control.

In this way, the degenerate control details can be determined by checking the traveling state of the vehicle against the table.

### [4 Table Indicating Correspondence Relationship between Vehicle control details and Identification Information]

The following describes a table indicating a correspondence relationship between vehicle control details and identification information, with reference to FIG. 4. This table is used to determine identification information to be obtained by obtainer 40.

FIG. 4 is a table illustrating an example of the correspondence relationship between vehicle control details and identification information. More specifically, FIG. 4 is a table illustrating not only the correspondence relationship between degenerate control details and a CAN ID as the identification information, but also an ECU that performs the degenerate control as well as specifics of the degenerate control, such as an execution cycle of degenerate control and a controlled amount of change. As an example, "slow deceleration" included in the degenerate control is mainly described here. For the degenerate control to achieve "slow deceleration", an engine brake is used for deceleration. Thus, this control is associated with CAN ID "0x123" of a CAN frame for engine control. CAN ID "0x123" identifies control details that causes engine ECU 122 to decrease the vehicle speed by amount of change "m km/s" with respect to a current speed, at intervals of "20 ms". To be more specific, transmission of the CAN frame including CAN ID "0x123" to bus 120 enables engine ECU 122 to obtain this CAN frame and execute the control details identified by CAN ID "0x123".

In this way, the identification information can be determined by checking the degenerate control against the table. At least one piece of identification information can be determined in accordance with the determined vehicle state, the table indicating the correspondence relationship between the vehicle state and the vehicle control details, and the table indicating the correspondence relationship between the vehicle control details and the identification information. Thus, obtainer 40 can obtain the at least one piece of identification information determined. Note that this determination may be made by any of the functional structural components included in electronic control device 1. For example, obtainer 40 may determine the identification information in accordance with the vehicle traveling state determined by traveling state determiner 30 and the aforementioned tables stored in storage 80, and then may obtain the determined identification information.

Here, in addition to the identification information determined in accordance with the vehicle traveling state and the tables, obtainer 40 obtains: identification information included in communication data detected as having an anomaly (or more specifically, a CAN ID included in an anomalous frame injected in, for instance, bus 110 by an attacker, for example); or identification information included in communication data transmitted and received by an ECU connected to the bus through which the communication data detected as having the anomaly flows (or more specifically, a CAN ID included in an ADAS frame transmitted and received by ADAS ECU 111 connected to bus 110 through which a CAN frame detected as having an anomaly flows, for example).

### [5 Operation Performed by Electronic Control Device]

Next, an operation performed by electronic control device 1 is described, with reference to FIG. 5 and FIG. 6.

FIG. 5 is flowchart illustrating an example of the operation performed by electronic control device 1 according to Embodiment.

First, transceiver 70 receives a CAN frame (communication data) from each of buses 110 and 120 (Step S101). For example, CAN frames having various CAN IDs are flowing successively on buses 110 and 120 at intervals of a few milliseconds for instance. Repetition of the process in Step S101 at intervals of a few milliseconds allows the CAN frames having the various CAN IDs to be received.

Next, electronic control device 1 determines whether electronic control device 1 is in the degenerate operation mode (Step S102). This determination may be made by any of the functional structural components included in electronic control device 1. In the present embodiment, electronic control device 1 makes this determination. Hereinafter, electronic control device 1 makes determination that may be made by any of the functional structural components included in electronic control device 1. If the vehicle is determined as having an anomaly in step S13 described later, electronic control device 1 is shifted into the degenerate operation mode.

If electronic control device 1 is not in the degenerate operation mode (NO in Step S102), or more specifically, if the vehicle is determined as having no anomaly, operation determiner 20 determines whether the vehicle has an anomaly, in accordance with the anomaly logs detected and accumulated by anomaly detector 10 (Step S103). As described above, operation determiner 20 determines whether the vehicle has an anomaly, according to whether the number of anomaly logs stored in storage 80 reaches the predetermined number, for example.

If the vehicle is determined as having no anomaly (NO in Step S103), electronic control device 1 waits for a next CAN frame to be received and then performs the processes from Step S101 again.

If the vehicle is determined as having an anomaly (YES in Step S103), obtainer 40 obtains a control target ID corresponding to the result of anomaly detection (Step S103). Here, the CAN ID is the identification information for identifying the control details related to the vehicle. Identification of the control details also allows a control target (that is, an ECU to be controlled) to be identified. For this reason, the CAN ID is also referred to as the control target ID. As described above, this control target ID is, for example: a CAN ID included in an CAN frame detected as having an anomaly; a CAN ID included in a CAN frame transmitted and received by an ECU connected to the bus through which the CAN frame detected as having the anomaly flows; or a CAN ID included in a CAN frame used to address the detected anomaly.

Because the vehicle has an anomaly, electronic control device 1 is shifted into the degenerate operation mode so that degenerate control is performed to address the anomaly (Step S105). Then, electronic control device 1 waits for a next CAN frame to be received and performs the processes from Step S101 again. Thus, hereafter, electronic control device 1 proceeds to "YES" in the process of Step S102.

Transceiver 70 receives a next CAN frame (Step S101) while electronic control device 1 is in the degenerate operation mode (YES in Step S102). In this case, electronic control device 1 determines whether the CAN frame received in Step S101 includes the control target ID obtained by obtainer 40 (Step S106).

If the CAN frame received in Step S101 does not include the control target ID (NO in Step S106), electronic control device 1 waits for a next CAN frame. Then, the processes from Step S101 are performed again and the determination is made in Step S106 again.

If the CAN frame received in Step S101 includes the control target ID (YES in Step S106), disabler 50 disables this CAN frame including the control target ID and flowing through the bus (Step S107). The process of Step S107 is described with reference to FIG. 6.

FIG. 6 illustrates an operation of the electronic control device according to Embodiment. In FIG. 6, signal (information) flow is indicated by arrows A to D in solid and dashed lines. Moreover, FIG. 6 schematically illustrates attacker 300 that attacks the in-vehicle network connected to electronic control device 1.

In FIG. 6, attacker 300 injects, into bus 110, a CAN frame (anomalous frame) indicated by arrow B, and this anomalous CAN frame is detected in bus 110. Thus, a control target ID includes, for example, a CAN ID included in the CAN frame that is indicated by arrow B and detected as being anomalous. This CAN ID is the at least one piece of identification information corresponding to the result of anomaly detection. Here, the CAN frame flowing through bus 110 is detected as being anomalous. In this case, the control target ID includes a CAN ID included in a CAN frame that is indicated by arrow C and transmitted and received by an ECU (such as ADAS ECU 111) connected to bus 110 through which the CAN frame detected as being anomalous flows. This CAN ID is the at least one piece of identification information corresponding to the result of anomaly detection. In this way, two or more control target IDs may exist. To disable the CAN frames including the control target IDs and flowing through bus 110, disabler 50 transmits disabling information (an error frame, for example) indicated by arrow A to disable the CAN frames, to bus 110 via transceiver 70. As a result, the CAN frames including the control target IDs and flowing through bus 110 are disabled.

As illustrated in FIG. 5, electronic control device 1 determines whether the disabled CAN frame has been transmitted in a correct transmission cycle (Step S108). A CAN frame flowing through the bus is normally transmitted at constant intervals. However, attacker 300 may transmit a CAN frame at a timing regardless of the constant intervals. The vehicle is controlled in a process of Step S109, described later, at a timing of transmission of the disabled CAN frame. If the disabled CAN frame was not transmitted in the correct transmission cycle, the vehicle is controlled at a timing different from the constant intervals. This may result in incorrect control performed on the vehicle. To avoid this, the process of Step S108 is performed to determine whether the disabled CAN frame was transmitted in the correct transmission cycle.

If the disabled CAN frame was not transmitted in the correct transmission cycle (NO in Step S108), electronic control device 1 waits for a next CAN frame. Then, the processes from Step S101 are performed again and the determination is made in Step S106 again.

If the disabled CAN frame was transmitted in the correct transmission cycle (YES in Step S108), controller 60 controls the vehicle in accordance with the control target ID (Step S109). The control target ID in this case is the at least one piece of identification information corresponding to the result of anomaly detection and is, for example, a CAN ID included in a CAN frame used to address the detected anomaly. For example, controller 60 generates a CAN frame including CAN ID "0x234", illustrated in FIG. 4, as a CAN ID used for degenerate control. Then, controller 60 transmits this CAN frame to bus 120 via transceiver 70 as indicated by arrow D in FIG. 6. As a result, brake ECU 121 obtains this CAN frame, and controls the brake in accordance with the CAN frame so that the vehicle rapidly decelerates. Moreover, controller 60 generates a CAN frame including CAN ID "0x345", illustrated in FIG. 4, as a CAN ID used for degenerate control for example. Then, controller 60 transmits this CAN frame to bus 120 via transceiver 70. As a result, steering ECU 123 obtains this CAN frame, and controls the steering in accordance with the CAN frame so that the vehicle is pulled over to the road shoulder or makes a lane change.

In this way, even if the CAN frame from ADAS ECU 111 is disabled, the control that is to be normally performed by ADAS ECU 111 can be performed by electronic control device 1. Thus, in the event of an anomaly occurring to the vehicle, the vehicle can be stopped safely.

Next, electronic control device 1 determines whether the vehicle is stationary or the anomaly is resolved (Step S110). If the vehicle is not stationary or the anomaly is not resolved (NO in Step S110), the processes from Step S101 to Step S109 are performed at specific intervals. This is because, as illustrated in FIG. 4, the CAN frame for degenerate control includes the controlled amount of change to be made for the corresponding ECU at the specific intervals. As a result of this, if the vehicle gradually decelerates and eventually stops (YES in Step S110), the process ends. If the anomaly is resolved while the vehicle is decelerating (YES in Step S110), the process ends because the vehicle has no anomaly and is not to be stopped.

### [6 Variation 1]

The CAN frame flowing through the bus and including the control target ID is disabled through the transmission of the error frame, to the bus, as the disabling information to disable the CAN frame including the control target ID. However, such CAN frame can be disabled in gateway ECU 150. Variation 1 describes this case with reference to FIG. 7.

FIG. 7 is a configuration diagram illustrating an example of electronic control device 1 according to Variation 1 of Embodiment. In Variation 1, electronic control device 1 is connected to dedicated line 130. Disabling information from disabler 50 is transmitted to gateway ECU 150. The rest of the configuration is the same as that according to Embodiment described above, and thus is omitted from the description.

Electronic control device 1 is connected to gateway 150 via dedicated line 130 different from the at least two buses (buses 110 and 120 in this case). Disabler 50 transmits the disabling information to gateway ECU 150 via dedicated line 130. For example, dedicated line 130 is a communication line that is not connected to an external source and resistant to attack from outside. Dedicated line 130 is a communication line used in Ethernet (registered trademark), for example. As illustrated in FIG. 7, gateway ECU 150 is capable of blocking CAN frames indicated by arrows B and C to keep these CAN frames from being transferred from bus 110 to bus 120.

### [7 Variation 2]

Storage 80 included in electronic control device 1 stores: the table indicating the correspondence relationship between the vehicle state and the vehicle control details as illustrated in FIG. 3; and the table indicating the correspondence relationship between the vehicle control details and the identification information as illustrate in FIG. 4. However, a storage (such as a memory) included in ADAS ECU 111 may store these tables. Variation 2 describes this case with reference to FIG. 8.

FIG. 8 is a configuration diagram illustrating an example of electronic control device 1 according to Variation 2 of Embodiment.

In Variation 2, electronic control device 1 is connected to ADAS ECU 111 via dedicated line 140 different from the at least two buses (buses 110 and 120 in this case). Obtainer 40 obtains at least one piece of identification information determined by ASAS ECU 111. The rest of the configuration is the same as that according to Embodiment described above, and thus is omitted from the description.

Anomaly detector 10 notifies ADAS ECU 111 of a result of detection via dedicated line 140. For example, dedicated line 140 is a communication line used in Ethernet (registered trademark), for example.

ADAS ECU 111 obtains the result of anomaly detection from anomaly detector 10 via transceiver 70 and dedicated line 140. For example, ADAS ECU 111 determines the state of the vehicle in accordance with communication data detected as having no anomaly by anomaly detector 10, among the results of sensing received from camera ECU 112 and sensor ECU 113, for example. More specifically, the state of the vehicle determined by ADAS ECU 111 indicates a speed of the vehicle, a lane in which the vehicle is traveling, or whether another vehicle is present ahead or behind or on the right or left, for example. Moreover, ADAS ECU 111 obtains a result of determination whether the vehicle has an anomaly, from operation determiner 20 via transceiver 70 and dedicated line 140.

If operation determiner 20 determines that an anomaly is occurring to the vehicle, ADAS ECU 111 determines degenerate control details in accordance with the vehicle traveling state determined by ADAS ECU 111 and the table, stored in ADAS ECU 111, indicating the correspondence relationship between the vehicle state and the vehicle control details.

Moreover, ADAS ECU 111 checks the determined degenerate control details against the table, stored in ADAS ECU 111, indicating the correspondence relationship between the vehicle control details and the identification information. By doing so, ADAS ECU 111 determines at least one piece of identification information. ADAS ECU 111 transmits the at least one piece of identification information determined, to electronic control device 1.

Then, obtainer 40 obtains, from ADAS ECU 111, the at least one piece of identification information determined by ADAS ECU 111 in accordance with the result of detection notified by anomaly detector 10.

In this way, ADAS ECU 111 may be notified of the result of detection by anomaly detector 10, and determine the at least one piece of identification information. Then, obtainer 40 may obtain the at least one piece of identification information determined by ADAS ECU 111.

### [8 Variation 3]

Electronic control device 1 may be connected to external receiver 160. Variation 3 describes this case with reference to FIG. 9.

FIG. 9 is a configuration diagram illustrating an example of electronic control device 1 according to Variation 3 of Embodiment.

In Variation 3, electronic control device 1 is connected to external receiver 160 via a communication line different from the at least two buses (buses 110 and 120 in this case). Controller 60 further controls the vehicle in response to an operation performed on external receiver 160. For example, external receiver 160 is an emergency stop device that is operated by an occupant of the vehicle in the event of an anomaly occurring to the vehicle. In the event of an anomaly or an unknown attack that is undetectable by anomaly detector 10, the occupant of the vehicle determines this situation and accordingly operates external receiver 160. As a result, the vehicle can be controlled (to make an emergency stop, for example).

### [9 Conclusion]

As described thus far, electronic control device 1 according to Embodiment is a system that is connected to at least one bus 110 of a mobile object (vehicle). Electronic control device 1 includes: controller 60 that controls behavior of the mobile object; anomaly detector 10 that performs detection to detect an anomaly in communication data which flows through the at least one bus 110 and which includes identification information for identifying control details related to the behavior of the mobile object; and obtainer 40 that obtains at least one piece of identification information corresponding to a result of the detection. Moreover, controller 60 may control the behavior of the mobile object in accordance with the control details identified by the at least one piece of identification information obtained by the obtainer. Furthermore, electronic control device 1 may include disabler 50 that disables the communication data which is detected as having the anomaly and which includes the at least one piece of identification information.

For example, it is difficult to specifically determine an anomaly occurring to bus 110 of the mobile object. In view of this, all pieces of identification information that can be possibly related to the anomaly are obtained as the at least one piece of identification information corresponding to the result of anomaly detection. Then, all pieces of communication data including the obtained identification information are disabled, for example. In this way, all the pieces of communication data including normal communication data are disabled because it is difficult to pinpoint and disable only anomalous communication data. In this case, communication data including identification information related to ADAS control or automated emergency stop may also be disabled. This may cause ADAS ECU 111 to be unable to control the mobile object. In contrast, the present disclosure enables electronic control device 1, instead of ADAS ECU 111, to control the mobile object in accordance with the disabled identification information. More specifically, even if the communication data including the identification information related to, for example, the ADAS control is disabled, electronic control device 1 is able to separately perform control based on the disabled identification information. Thus, even if the identification information related to the ADAS control or control like automated emergency stop performed to safely stop the mobile object to address the anomaly occurring to the mobile object is disabled, separate control can be performed to safely stop the mobile object. In this way, the mobile object can be stopped safely in the event of an anomaly occurring to the mobile object.

More specifically, the at least one piece of identification information may include at least one of: identification information included in communication data detected as having an anomaly; identification information included in communication data transmitted and received by a device (ECU) connected to bus 110 through which the communication data detected as having the anomaly flows; and identification information included in communication data used to address the anomaly detected. Controller 60 may control the mobile object in accordance with the identification information included in the communication data used to address the anomaly detected.

Moreover, electronic control device 1 may be connected to at least two buses 110 and 120. At least two buses 110 and 120 may be connected to a gateway device (gateway ECU 150) that transfers communication data from one of the at least two buses to the other of the at least two buses. Disabler 50 may transmit, to gateway ECU 150, disabling information to disable the communication data that includes the at least one piece of identification information.

For example, suppose that a denial of attack (DoS) is made on bus 110 or 120. In this case, transmission of an error frame to bus 110 or 120 to disable communication data increases load on bus 110 or 120. In contrast, transmission of disabling information to gateway ECU 150 enables gateway ECU 150 to block target communication data in gateway ECU 150 in accordance with the disabling information. This reduces the load on bus 110 or 120 and also disables the communication data (i.e., interrupts transfer of the communication data from one bus to the other).

Electronic control device 1 may be connected to gateway ECU 150 via dedicated line 130 different from at least two buses 110 and 120. Disabler 50 may transmit the disabling information to gateway ECU 150 via dedicated line 130.

For example, suppose that bus 110, which is used in CAN communications, is used for transmitting the disabling information. In this case, if bus 110 is connected to an unauthorized node and receives unauthorized information, unauthorized rewriting may be performed on this disabling information. To avoid this, the disabling information may be transmitted via dedicated line 130 that is resistant to attack from outside, for example. This keeps the disabling information from unauthorized rewriting.

Disabler 50 may transmit the disabling information to gateway ECU 150 via a bus, among at least two buses 110 and 120, through which communication data detected as having no anomaly flows.

Thus, the disabling information is transmitted via bus 120 through which communication data detected as having no anomaly flows, instead of bus 110 through which communication data detected as having an anomaly flows. This allows the disabling information to be transmitted safely to gateway ECU 150.

At least one bus 110 may be connected to a driver assistance device (ADAS ECU 111) that assists driving of the mobile object. Electronic control device 1 may be connected to ADAS ECU 111 via dedicated line 140 different from at least one bus 110. Anomaly detector 10 may notify ADAS ECU 111 of the result of the detection via dedicated line 140. Obtainer 40 may obtain, from ADAS ECU 111, the at least one piece of identification information determined by ADAS ECU 111 in accordance with the result of the detection notified.

ADAS ECU 111 is connected to many sensors, and has a high arithmetic processing capability to process sensor information received from these sensors. On this account, determination of the at least one piece of identification information by ADAS ECU 111 corresponding to the result of detection allows the mobile object to be controlled more safely.

Electronic control device 1 may be connected to external receiver 160 operated by an occupant of the mobile object in the event of an anomaly occurring to the mobile object, via a communication line different from at least one bus 110. Controller 60 may further control the mobile object in response to an operation performed on external receiver 160.

This enables mandatory control, like an emergency stop that is to be based on a judgment of the occupant, to be performed on the mobile object, for example.

The at least one piece of identification information may be used for identifying the control details corresponding to a state of the mobile object determined by communication data detected as having no anomaly.

For example, if the control details of the mobile object are determined in accordance with the communication data detected as having an anomaly, the mobile object may not be stopped safely. In contrast, the normal communication data is used for determining the control details to safely stop the mobile object. As a result, the mobile object can be stopped safely.

### [Other embodiments]

Embodiment has been described thus far as an example of the technology according to the present disclosure. However, the technology according to the present disclosure is not limited to Embodiment described above and is applicable to embodiments implemented through modification, substitution, addition, and omission as appropriate. For example, the following variation is also to be included in an aspect according to the present disclosure.

For example, the present disclosure is implemented by electronic control device 1 that is a device (such as an ECU) installed in a mobile object, such as a vehicle. However, this is not intended to be limiting. For example, the present disclosure may be implemented by an electronic control system that includes: an electronic control device installed in a mobile object; and a server (such as a management center) located outside the mobile object and capable of communication with the electronic control device. This case is described with reference to FIG. 10.

FIG. 10 illustrates an example of electronic control system 1a according to another embodiment.

Electronic control system 1a includes: electronic control device 100 installed in a mobile object; and server 101 located outside the mobile object. The structural components included in electronic control device 1 according to Embodiment are dispersedly located in electronic control device 100 and server 101. To be more specific, anomaly detector 10 and operation determiner 20 are included in server 101 whereas the other structural components are included in electronic control device 100. Moreover, electronic control system 1a includes communicator 90. The rest of the configuration is the same as electronic control system 1 according to Embodiment described above, and thus is omitted from the description.

Communicator 90 is connected to an external network (such as the Internet), and transmits and receives communication data to and from server 101. This allows electronic control system 1a to implement a function using server 101. For example, this function is capable of detecting an anomaly in more detail and determining more accurately whether an anomaly is occurring to the mobile object. Communication between electronic control device 100 and server 101 may be established according to any communication protocol, such as wireless communication or wired communication.

In this way, the structural components included in electronic control device 1 according to Embodiment may be dispersedly located in a plurality of devices (electronic control device 100 and server 101 in this case) in electronic control system 1a.

Furthermore, the present disclosure may be implemented by a function-intensive electronic control device, such as a central ECU or a domain controller, for example. This case is described with reference to FIG. 11.

FIG. 11 is a configuration diagram illustrating an example of electronic control device 1b according to another embodiment. Electronic control device 1b is connected to Zone ECUs 124 and 125 via buses 110 and 120. Zone ECU 124 is connected to camera 1120 and sensor 1130. Zone ECU 125 is connected to brake 1210, engine 1220, and steering 1230.

Various control mechanisms related to sensors and actuators connected to these ECUs are integrated in controller 60 of electronic control device 1b. More specifically, electronic control device 1b performs communication in cooperation with Zone ECUs 124 and 125 and operates as a central ECU in which individual actuator ECUs and sensor ECUs are integrated. To be more specific, controller 60 performs communication in cooperation with Zone ECUs 124 and 125 to control behavior of camera 1120, sensor 1130, brake 1210, engine 1220, and steering 1230. Then, anomaly detector 10 is capable of detecting an anomaly in communication data flowing through buses 110 and 120 and indicating control details related to camera 1120, sensor 1130, brake 1210, engine 1220, and steering 1230. This communication data includes, for example: CAN data detected as having an anomaly; CAN data transmitted and received by a device connected to the bus through which the CAN data detected as having the anomaly flows; and CAN data used to address the detected anomaly. The control details can be identified by a CAN ID. Obtainer 40 is able to obtain this CAN ID, for example.

As described in Embodiment, controller 60 is capable of performing the same control as the ADAS control in accordance with, for example, the result of operation determination by operation determiner 20 and the details of the traveling state determined by traveling state determiner 30. For example, controller 60 is capable of controlling behavior of the mobile object, in comprehensive consideration of the result of anomaly detection by anomaly detector 10, the result of operation determination by operation determiner 20, and the details of the traveling state determined by traveling state determiner 30. Moreover, the behavior of the vehicle may be controlled in accordance with the control details identified by the CAN ID detected as being anomalous, for example. Note that this controller 60 is capable of ADAS control performed by ADAS ECU 111 described in Embodiment.

Moreover, electronic control device 1b includes GW-transceiver 70a. GW-transceiver 70a has the same function as gateway ECU 150 in addition to the function of transceiver 70 described in Embodiment. A function as a gateway ECU is the same as the function of gateway ECU 150 and thus detailed description is omitted here.

The rest of the configuration is the same as that of electronic control device 1 according to Embodiment, and thus is omitted from the description.

Furthermore, Embodiment described above may use, instead of the CAN communication, a communication method, such as a CAN extended format, a CAN with flexible data rate (CANFD), a time triggered CAN (TTCAN), Ethernet (registered trademark), a local interconnect network (LIN), a media oriented systems transport (MOST), or FlexRay.

Note that the present disclosure is implemented not only as electronic control device 1 and electronic control system 1a, but also as an electronic control method that includes steps (processes) executed by the structural components included in electronic control device 1 and electronic control system 1a.

To be more specific, the electronic control method is used by electronic control device 1 (electronic control system 1a) that is connected to at least one bus 110 of a mobile object through which communication data including identification information for identifying control details related to the mobile object flows. As illustrated in FIG. 5, the electronic control method includes: performing detection to detect an anomaly in communication data flowing through at least one bus 110 (Step S103); obtaining at least one identification information corresponding to a result of the detection (Step S104); and controlling behavior of the mobile object (Step S109).

For example, steps in the electronic control method may be executed by a computer (computer system). In the present disclosure, the steps in the electronic control method may be implemented to a program for causing a computer to execute the steps. Furthermore, the present disclosure may be implemented to a non-transitory computer-readable recording medium such as a Compact Disc-Read Only Memory (CD-ROM) on which the program is recorded.

For example, if the program is implemented to a program (software), the steps are executed when the program is executed by using hardware resources of the computer, such as a central processing unit (CPU), a memory, an input/output circuit. In other words, the steps are executed when the CPU acquires data from the memory, the input/output circuit, or the like and performs calculation, or outputs the calculation results to the memory, the input/output circuit, or the like.

Moreover, the elements included in electronic control device 1 and electronic control system 1a according to the above embodiments may be implemented to a specialized circuit or a general purpose circuit.

It should be noted that each of the elements included in electronic control device 1 and electronic control system 1a according to the above embodiments may be implemented to a Large Scale Integration (LSI) which is an integrated circuit (IC).

The technique of integrated circuit is not limited to the LSI, and it may be implemented as a dedicated circuit or a general-purpose processor. It is also possible to use a Field Programmable Gate Array (FPGA), or a reconfigurable processor in which connection and setting of circuit cells inside the LSI can be reconfigured.

Further, if an integrated circuit technology that replaces LSI emerges from advances in or derivations of semiconductor technology, integration of the elements included in electronic control device 1 and electronic control system 1a may use the technology.

In addition, the present disclosure may include embodiments obtained by making various modifications on the above embodiments which those skilled in the art will arrive at, or embodiments obtained by selectively combining the elements and functions disclosed in the above embodiments, without materially departing from the scope of the present disclosure.

### [Industrial Applicability]

The present disclosure is applicable to a device that addresses an anomaly detected in communication data flowing through a network in an automobile, construction equipment, farm equipment, a ship, a train, or an airplane, for example.

### [Reference Signs List]

- 1, 1b, 100: electronic control device
- 1a: electronic control system
- 10: anomaly detector
- 20: operation determiner
- 30: traveling state determiner
- 40: obtainer
- 50: disabler
- 60: controller
- 70: transceiver
- 70a: GW-transceiver
- 80: storage
- 90: communicator
- 101: server
- 110, 120: bus
- 111: ADAS ECU
- 112: camera ECU
- 113: sensor ECU
- 121: brake ECU
- 122: engine ECU
- 123: steering ECU
- 124, 125: Zone ECU
- 130, 140: dedicated line
- 150: gateway ECU
- 160: external receiver
- 300: attacker
- 1120: camera
- 1130: sensor
- 1210: brake
- 1220: engine
- 1230: steering

## Claims

1. An electronic control device that is connected to at least one bus of a mobile object, the electronic control device comprising:
a controller that controls behavior of the mobile object;
an anomaly detector that performs detection to detect an anomaly in communication data which flows through the at least one bus and which includes identification information for identifying control details related to the behavior of the mobile object; and
an obtainer that obtains at least one piece of identification information corresponding to a result of the detection.

2. The electronic control device according to claim 1,
wherein the controller controls the behavior of the mobile object in accordance with the control details identified by the at least one piece of identification information obtained by the obtainer.

3. The electronic control device according to one of claim 1 and claim 2, further comprising:
a disabler that disables the communication data which is detected as having the anomaly and which includes the at least one piece of identification information.

4. The electronic control device according to any one of claim 1 to claim 3,
wherein the at least one piece of identification information includes at least one of: identification information included in communication data detected as having an anomaly; identification information included in communication data transmitted and received by a device connected to a bus through which the communication data detected as having the anomaly flows; and identification information included in communication data used to address the anomaly detected, and
the controller controls the mobile object in accordance with the identification information included in the communication data used to address the anomaly detected.

5. The electronic control device according to claim 3,
wherein the electronic control device is connected to at least two buses,
the at least two buses are connected to a gateway device that transfers communication data from one of the at least two buses to an other of the at least two buses, and
the disabler transmits, to the gateway device, disabling information to disable the communication data that includes the at least one piece of identification information.

6. The electronic control device according to claim 5,
wherein the electronic control device is connected to the gateway device via a dedicated line different from the at least two buses, and
the disabler transmits the disabling information to the gateway device via the dedicated line.

7. The electronic control device according to claim 5,
wherein the disabler transmits the disabling information to the gateway device via a bus, among the at least two buses, through which communication data detected as having no anomaly flows.

8. The electronic control device according to any one of claim 1 to claim 7,
wherein the at least one bus is connected to a driver assistance device that assists driving of the mobile object,
the electronic control device is connected to the driver assistance device via a dedicated line different from the at least one bus,
the anomaly detector notifies the driver assistance device of the result of the detection via the dedicated line, and
the obtainer obtains, from the driver assistance device, the at least one piece of identification information determined by the driver assistance device in accordance with the result of the detection notified.

9. The electronic control device according to any one of claim 1 to claim 8,
wherein the electronic control device is connected to an external receiver operated by an occupant of the mobile object in an event of an anomaly occurring to the mobile object, via a communication line different from the at least one bus, and
the controller further controls the mobile object in response to an operation performed on the external receiver.

10. The electronic control device according to any one of claim 1 to claim 9,
wherein the at least one piece of identification information is used for identifying the control details corresponding to a state of the mobile object determined by communication data detected as having no anomaly.

11. An electronic control method used by an electronic control device that is connected to at least one bus of a mobile object, the electronic control method comprising:
controlling behavior of the mobile object;
performing detection to detect an anomaly in communication data which flows through the at least one bus and which includes identification information for identifying control details related to the behavior of the mobile object; and
obtaining at least one piece of identification information corresponding to a result of the detection.

12. A program causing a computer to execute the electronic control method according to claim 11.
